# EUROPEAN PATENT SPECIFICATION

(11) **EP 2 226 673 B1**
(45) Date of publication and mention of the grant of the patent: **14.08.2013**
(21) Application number: 09154529.3
(22) Date of filing: 06.03.2009
(51) Int. Cl.: G02F 1/13357

(54) **Backlight unit**
Rückbeleuchtungseinheit
Unité de rétroéclairage

(43) Date of publication of application: 08.09.2010
(73) Proprietor: OSRAM Opto Semiconductors GmbH, 93055 Regensburg (DE)
(72) Inventor: Chikazawa, Yoshiharu, Yokohama 221-0073 (JP)
(74) Representative: Epping - Hermann - Fischer

(56) References cited:
- EP-A1- 1 380 876
- WO-A-2008/082136
- US-A1- 2006 240 286
- US-A1- 2007 146 584
- US-A1- 2007 229 736

## Description

A backlight unit is described in the present application, which can be used in a Liquid Crystal Display (LCD) for backlighting a Liquid Crystal (LC) Panel of the LCD.

Conventional display devices are described in US 2007/0146584, US 2007/0229736, US 2006/0240286, WO 2008/082136 and EP 1380 876.

In addition to a LC Panel, a usual LCD uses a backlight unit emitting bluish white light from a light source and having a colour filter comprising red colour filter regions, green colour filter regions and blue colour filter regions. The backlight unit is arranged in front of the LC Panel in the direction of light, wherein the colour filter is placed between the LC Panel and the light source. One method to get bluish white light within the usual LCD is to use blue light emitting diodes in combination with a conversion element converting a part of the blue light into yellow light and getting white light by mixing the blue light and the yellow light. The problem with this method is the poor colour purity on blue and green after the light has passed through the colour filter. This is caused by the overlap of the spectral distributions of the green colour filter regions and the blue colour filter regions and by the broad spectral distribution of the white light coming from the conversion element.

It is an object of the present application to specify a backlight unit with a better colour purity.

This object is achieved by means of a backlight unit in accordance with claim 1.

The dependent claims relate to advantageous developments and configurations of the invention.

In accordance with one preferred embodiment, the backlight unit comprises a light source with a plurality of semiconductor components, each of the semiconductor components emitting light of a first colour. Furthermore, the backlight unit comprises a conversion element having a plurality of transparent regions for letting pass the light of the first colour in an unmodified way and a plurality of conversion regions for converting the light of the first colour and producing mixed light. In particular, the mixed light is composed of light of the first colour and converted light. Moreover, the backlight unit comprises a filter element having a plurality of first colour regions, a plurality of second colour regions and a plurality of third colour regions, wherein light of a second colour is produced from the mixed light in the second colour regions and light of a third colour is produced in the third colour regions from the mixed light.

So in contrast to a usual backlight unit converting the light in all regions of the backlight unit and therefore producing mixed light over the whole backlight unit area, the backlight unit according to the present invention converts the light only in the conversion regions, whereas the light passing trough the transparent regions remains unconverted, so that the backlight unit is illuminated area by area by light of the first colour and by mixed light behind the plane of the conversion element in the direction of light. Especially, the areas behind the plane of the conversion element being illuminated by light of the first colour and by mixed light are separate areas.

The semiconductor components of the light source can be semiconductor chips. Alternatively, the semiconductor components can be semiconductor chips with housings, each of the semiconductor chips being arranged in a housing. Preferably, the light source comprises a plurality of semiconductor components being arranged on a common carrier.

For producing light of a first colour, each of the semiconductor chips preferably contains an active layer which should be understood in the present case to mean a radiation-generating pn-junction. In the simplest case, this pn-junction can be formed by means of a p-conducting and an n-conducting semiconductor layer which directly adjoin one another. Preferably, the actual radiation-generating layer for instance in the form of a doped or undoped quantum layer, is formed between the p-conducting and the n-conducting semiconductor layer. The quantum layer can be shaped as a single quantum well (SQW) structure or multiple quantum well (MQW) structure or else as a quantum wire or quantum dot structure.

In accordance with a preferred configuration, the semiconductor chips are produced by thin film technology. A semiconductor chip produced by this method is distinguished by at least one of the following characteristic features:
- a reflection layer is applied or formed at a first main area - facing toward a carrier element - of a radiation-generating epitaxial layer sequence, said reflection layer reflecting at least part of the electromagnetic radiation generated in the epitaxial layer sequence back into the latter;
- the epitaxial layer sequence has a thickness in the region of 20 µm or less, in particular in the region of 10 µm; and
- the epitaxial layer sequence contains at least one semiconductor layer having at least one area having an intermixing structure which ideally leads to an approximately ergodic distribution of the light in the epitaxial layer sequence, that is to say that it has an as far as possible ergodically stochastic scattering behavior.

A basic principle of a thin-film light-emitting diode chip is described for example in I. Schnitzer et al., Appl. Phys. Lett. 63 (16), October 18, 1993, 2174 - 2176.

A thin-film light-emitting diode chip is to a good approximation a Lambertian surface emitter and is suitable for projection applications.

According to one preferred embodiment, the conversion element is arranged behind the light source in the direction of light. In particular, the light source and the conversion element are separate elements. Moreover, the conversion element can be one single element covering the entirety of semiconductor components.

The filter element is arranged behind the conversion element in the direction of light. Advantageously, the filter element is one single element covering the whole conversion element.

In accordance with one preferred configuration, the first colour regions of the filter element are transparent for letting pass the light of the first colour in an unmodified way. The transparent regions of the conversion element and the first colour regions of the filter element are arranged in-line. Thus, the light of the first colour emitted by the light source and passing through the transparent regions of the conversion element can directly reach the first colour regions of the filter element. As the first colour regions can be transparent for the light of the first colour, the light of the first colour can pass through the first colour regions of the filter element in an unmodified way. So, the light passing through the transparent regions of the conversion element and passing through the first colour regions of the filter element preferably does not change its colour.

In accordance with an advantageous embodiment, the second colour regions of the filter element comprise a colour filter for producing the second colour from the mixed light. The conversion regions of the conversion element and the second colour regions of the filter element are arranged in-line. In particular, the conversion regions of the conversion element and the second colour regions of the filter element are arranged in such a way that the light of the first colour emitted by the light source and being converted in the conversion regions of the conversion element can directly reach the second colour regions of the filter element. So, the light passing through the conversion regions of the conversion element and passing through the second colour regions of the filter element preferably changes its colour from the first colour to the mixed colour to the second colour.

In accordance with a further advantageous embodiment, the third colour regions of the filter element comprise a colour filter for producing the third colour from the mixed light. The conversion regions of the conversion element and the third colour regions of the filter element are arranged in-line. In particular, the conversion regions of the conversion element and the third colour regions of the filter element are arranged in such a way that the light of the first colour emitted by the light source and being converted in the conversion regions of the conversion element can directly reach the third colour regions of the filter element. So, the light passing through the conversion regions of the conversion element and passing through the third colour regions of the filter element preferably changes its colour from the first colour to the mixed colour to the third colour.

In accordance with a preferred configuration, the conversion region comprises phosphor. The phosphor is excited by the light of the first colour. By means of the phosphor the light of the first colour can be converted at least partly into light of greater wavelength(s). Any type of phosphor can be used like a broadband type phosphor emitting from green to red, for example, or a multi phosphor which is a combination of phosphors, for example a combination of green and red phosphors. Advantageously, the conversion regions comprise a phosphor emitting at wavelengths corresponding to the second colour and the third colour. Consequently, the light coming from the conversion regions is mixed at least from light of the second and the third colour. Furthermore, the mixed light can have a first colour component.

Suitable phosphors are YAG:Ce powders, for example. Further suitable phosphors are described in WO98/12757.

According to an advantageous variant, the light of the first colour is blue light. In order to generate blue light, the semiconductor components preferably contain a nitride-based compound semiconductor material. The compound semiconductor material has, in particular, the composition AlₙGaₘIn₁₋ₙ₋ₘN, where 0 ≤ n ≤ 1, 0 ≤ m ≤ 1 and n+m ≤ 1.

Moreover, the mixed light is preferably white light. In particular, the light of the second colour is red light and the light of the third colour is green light. So, the phosphor used for the conversion regions advantageously emits red and green light.

The plurality of semiconductor components are arranged regularly in one plane. Especially, the plurality of semiconductor components form an array of columns and rows. The semiconductor components are preferably equispaced wihtin each column and row.

The transparent regions of the conversion element are formed like stripes, each of the stripes corresponding to 1 x n column(s), wherein n is a natural number. This means that the transparent regions can each have the size of one, two, three...column(s). Advantageously, the light source and the conversion element are placed with respect to each other in such a way that 1 x n column(s) of semiconductor components are covered by a stripe-like transparent region having the size of 1 x n column(s).

Moreover, the first colour regions of the filter element are formed like stripes, each of the stripes corresponding to 1 x n column(s), wherein n is a natural number. This means that the first colour regions can each have the size of one, two, three...column(s). Advantageously, the stripe-like first colour regions are arranged behind the stripe-like transparent regions of the conversion element in the direction of light. Especially, the stripe-like transparent regions and the stripe-like first colour regions are arranged in-line. Moreover, the stripe-like first colour regions and the stripe-like transparent regions preferably have the same size. Thus, most of the light passing through the transparent regions passes through the first colour regions, too.

The conversion regions of the conversion element are formed like stripes, each of the stripes corresponding to 2 x n column(s), wherein n is a natural number. This means that the conversion regions preferably have twice the size of the transparent regions. Advantageously, the light source and the conversion element are placed with respect to each other in such a way that 2 x n column(s) of semiconductor components are covered by a stripe-like conversion region having the size of 2 x n column(s).

Moreover, the second colour regions and the third colour regions of the filter element are formed like stripes, each of the stripes corresponding to 1 x n column(s), wherein n is a natural number. In particular, the second colour regions and the third colour regions are arranged behind the conversion regions in the direction of light. Especially, the second colour regions and the third colour regions are arranged in-line with the conversion regions. One second colour region and one third colour region preferably have together the same size like one conversion region. Thus, most of the light passing through the conversion regions passes through the second and third colour regions, too.

According to a particular configuration, the conversion element and the filter element are two separate plates. For example, the conversion element can comprise a plate and phosphor, the phosphor being provided to the plate in a region where to form the conversion regions and being omitted in a region where to form the transparent regions. Furthermore, the filter element can comprise a plate having transparent regions where to form the first colour regions and regions with colour filters where to form the second and the third colour regions.

According to an alternative embodiment, the conversion element and the filter element are integrated in one plate and are arranged on two opposite sides of a substrate. The substrate can be a transparent substrate made of glass or plastic. In particular, the conversion regions of the conversion element are formed by applying a suitable phosphor on one side of the substrate in regions where to form the conversion regions, whereas the transparent regions are formed by omitting the phosphor. Moreover, the second and the third colour regions of the filter element are formed by providing colour filters on a side of the substrate opposite to the conversion element, whereas the first colour regions are formed by leaving the respective regions of the substrate transparent.

According to another embodiment, the conversion element and the filter element are integrated in one plate and are arranged on the same side of a substrate one on top of the other.

In accordance with one preferred variant, the plurality of transparent regions and the plurality of conversion regions are arranged alternately.

Moreover, the plurality of first, second and third colour regions are arranged alternately.

The backlight unit described above can be used advantageously within a LCD for backlighting the LC panel of the LCD. This allows for better and brighter blue on the LCD, for example, as in comparison to a usual LCD the blue light is not filtered from the white light but is produced directly.

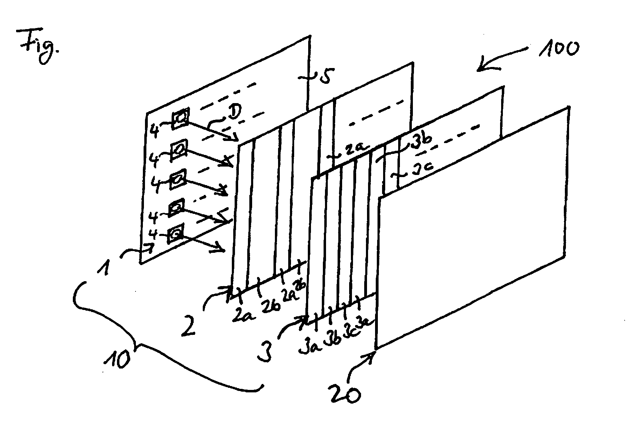

Further features, advantages and expediences of the invention will become apparent from the exemplary embodiment described below in conjunction with the figure.

The figure shows a schematic perspective view of an exemplary embodiment of a backlight unit according to the invention.

The backlight unit 10 illustrated in the figure is shown as a part of a LCD 100. In addition to the backlight unit 10, the LCD 100 comprises a LC panel 20. The LC panel 20 is arranged behind the backlight unit 10 in the direction D of light and thus is illuminated by the backlight unit 10.

The backlight unit 10 comprises a light source 1, a conversion element 2 and a filter element 3. The conversion element 2 is arrangend behind the light source 1 in the direction D of light, whereas the filter element 3 is arranged behind the conversion element 2 in the direction D of light.

The light source 1 comprises a plurality of semiconductor components 4. Advantageously, the semiconductor components 4 contain a nitride-based compound semiconductor material. The compound semiconductor material has, in particular, the composition AlₙGaₘIn₁₋ₙ₋ₘN, where 0 ≤ n ≤ 1, 0 ≤ m ≤ 1 and n+m ≤ 1. Each of the semiconductor components 4 can emit blue light.

Preferably, the semiconductor components 4 are regularly arranged in one plane forming an array of columns and rows, wherein the semiconductor components 4 of one column can be equispaced as well as the semiconductor components 4 of one row. In particular, the semiconductor components 4 are mounted on a common carrier 5.

The light emitted by the semiconductor components 4 is incident on the conversion element 2 in the direction D of light. The conversion element 2 comprises a plurality of transparent regions 2a and a plurality of conversion regions 2b. The light emitted by the semiconductor components 4 can pass through the transparent regions 2a in an unmodified way, which means that the wavelength does not change essentially. However, the light passing through the conversion regions 2b is converted, and the wavelength is shifted to greater wavelengths. In particular, the mixed light emitted by the conversion regions 2b can be white light.

According to the embodiment shown in the figure, one conversion region 2b is arranged between two transparent regions 2a respectively. The shape of the regions 2a, 2b is adapted to the alignment of the semiconductor components 4 being arranged in rows and columns. Especially, the regions 2a, 2b are formed stripe-like, wherein the transparent regions 2a are formed like stripes, each of the stripes corresponding to 1 x n column(s) and the conversion regions 2b are formed like stripes, each of the stripes corresponding to 2 x n column(s), wherein n is a natural number. So, the conversion regions 2b preferably are twice as large as the transparent regions 2a. The reason is that the conversion regions 2b are provided for the generation of light of two colours, the second colour and the third colour, whereas the transparent regions 2a are provided for the generation of light of only one colour, the first colour.

Alternatively, the alignment of the transparent and conversion regions 2a, 2b can be adapted to the rows of semiconductor components 4 instead of being adapted to the columns.

The light emitted by the conversion element 2 is incident on the filter element 3 in the direction D of light. The filter element 3 comprises a plurality of first colour regions 3a, a plurality of second colour regions 3b and a plurality of third colour regions 3c. Preferably, the first colour regions 3a are transparent, so that the light emitted by the transparent regions 2a can pass through the first colour regions 3a in an unmodified way, which means that the wavelength does not change essentially. The light passing through the transparent regions 2a and the first colour regions 3a preferably is blue light.

Moreover, each of the second and third colour regions 3b, 3c contain a colour filter so that the mixed light passing through the second colour regions 3b is filtered and afterwards has a wavelength corresponding to the second colour, whereas the mixed light passing through the third colour regions 3b is filtered and afterwards has a wavelength corresponding to the third colour. In particular, the light of the second colour can be red, whereas the light of the third colour can be green.

The regions 3a, 3b, 3c are alternately arranged, one first colour region 3a being arranged next to one second colour region 3b, and one second colour region 3b being arranged next to one third colour region 3c.

The shape of the regions 3a, 3b, 3c is adapted to the shape of the regions 2a, 2b. Especially, the regions 3a, 3b, 3c are formed stripe-like corresponding to 1 x n column(s), wherein n is a natural number. So, the size of one second colour region 3b together with one third colour region 3c corresponds to the size of one conversion region 2b.

If the transparent and conversion regions 2a, 2b are aligned according to the rows of semiconductor components 4, the regions 3a, 3b, 3c are aligned accordingly.

According to the embodiment shown in the figure, the conversion element 2 and the filter element 3 are separate elements.

The light emitted by the filter element 3 is incident on the LC panel 20 in the direction D of light. The LC panel 20 controls which pixels are illuminated, wherein the colour of the pixels is affected by the backlight unit 10, especially by the filter element 3.

The LCD 100 discussed in connection with the figure has a better and brighter blue colour than a usual LCD. The colour filter cost can be reduced as colour filters are used only in the second and third colour regions 3b, 3c of the filter element 3, but not in the first colour regions 3a. Furthermore, the volume of the phosphor used in the conversion element 2 can be reduced, as conversion happens only in the conversion regions 2b, but not in the transparent regions 2a.

The invention is not restricted by the description on the basis of the exemplary embodiment. Rather, the scope of the invention is defined by the appended claims.

## Claims

1. A backlight unit (10) comprising
- a light source (1) emitting light of a first colour,
- a conversion element (2) having a plurality of transparent regions (2a) for letting pass the light of the first colour in an unmodified way and a plurality of conversion regions (2b) for converting the light of the first colour and producing mixed light, and
- a filter element (3) having a plurality of first colour regions (3a), a plurality of second colour regions (3b) and a plurality of third colour regions (3c), wherein
light of a second colour is produced from the mixed light in the second colour regions (3b) and light of a third colour is produced in the third colour regions (3c) from the mixed light,
**characterized in that**
- the light source (1) comprises a plurality of semiconductor components (4) being arranged in one plane and forming an array of columns and rows, each of the semiconductor components (4) emitting light of the first colour,
- all colour regions (3a, 3b, 3c) are formed like stripes, each of the stripes of the first colour regions (3a), of the second colour regions (3b) and the third colour regions (3c) aligned with n column(s) of the semiconductor components (4), wherein n is a natural number,
- the transparent regions (2a) of the conversion element (2) are formed like stripes, each of the stripes aligned with n column(s) of the semiconductor components (4),
- each of the stripes of the first colour regions (3a) of the filter element (3) are arranged behind the stripe-like transparent regions (2a) of the conversion element (2) in the direction (D) of light, and
- the conversion regions (2b) of the conversion element (2) are formed like stripes, each of the stripes aligned with 2 x n column(s) of the semiconductor components (4),

2. A backlight unit (10) according to claim 1, wherein the first colour regions (3a) of the filter element (3) are transparent for letting pass the light of the first colour in an unmodified way.

3. A backlight unit (10) according to claim 1 or 2, wherein the second colour regions (3b) of the filter element (3) comprise a colour filter for producing the second colour from the mixed light.

4. A backlight unit (10) according to one of the preceding claims, wherein the third colour regions (3c) of the filter element (3) comprise a colour filter for producing the third colour from the mixed light.

5. A backlight unit (10) according to one of the preceding claims, wherein the conversion regions (2b) comprise phosphor emitting at a wavelength corresponding to the second colour and the third colour.

6. A backlight unit (10) according to one of the preceding claims, wherein the conversion element (2) is arranged behind the light source (1) in the direction (D) of light and the filter element (3) is arranged behind the conversion element (2) in the direction (D) of light.

7. A backlight unit (10) according to one of the preceding claims, wherein each of the stripes of the second colour regions (3b) and the third colour regions (3c) of the filter element (3) are arranged behind the stripe-like conversion regions (2b) of the conversion element (2) in the direction (D) of light.

8. A backlight unit (10) according to one of the preceding claims, wherein the conversion element (2) and the filter element (3) are two separate plates.

9. A backlight unit (10) according to one of the preceding claims, wherein the conversion element (2) and the filter element (3) are integrated in one plate and are arranged on two opposite sides of a substrate.

10. A backlight unit (10) according to one of the preceding claims, wherein the conversion element (2) and the filter element (3) are integrated in one plate and are arranged on the same side of a substrate one on top of the other.

11. A backlight unit (10) according to one of the preceding claims, wherein the light of the first colour is blue light and the mixed light is white light.

## Patentansprüche

1. Hintergrundbeleuchtungseinheit (10), umfassend
- eine Lichtquelle (1), welche Licht einer ersten Farbe ausstrahlt,
- ein Konversionselement (2) mit einer Mehrzahl von transparenten Bereichen (2a), um das Licht der ersten Farbe unverändert passieren zu lassen, und mit einer Mehrzahl von Konversionsbereichen (2b), um das Licht der ersten Farbe zu konvertieren und gemischtes Licht zu erzeugen, und
- ein Filterelement (3) mit einer Mehrzahl erster Farbbereiche (3a), einer Mehrzahl von zweiten Farbbereichen (3b) und einer Mehrzahl von dritten Farbbereichen (3c), wobei
Licht einer zweiten Farbe aus dem gemischten Licht in den zweiten Farbbereichen (3b) erzeugt wird und wobei Licht einer dritten Farbe in den dritten Farbbereichen (3c) aus dem gemischten Licht erzeugt wird,
**dadurch gekennzeichnet, dass**
- die Lichtquelle (1) eine Mehrzahl von Halbleiterkomponenten (4) umfasst, welche in einer Ebene angeordnet sind und ein Gitter aus Spalten und Reihen ausbilden, wobei jede der Halbleiterkomponenten (4) Licht der ersten Farbe ausstrahlt,
- alle Farbbereiche (3a, 3b, 3c) wie Streifen ausgebildet sind, wobei jeder der Streifen der ersten Farbbereiche (3a), der zweiten Farbbereiche (3b) und der dritten Farbbereiche (3c) mit n Spalten der Halbleiterkomponenten (4) gefluchtet ist, wobei n eine natürliche Zahl ist,
- die transparenten Bereiche (2a) des Konversionselements (2) wie Streifen ausgebildet sind, wobei jeder der Streifen mit n Spalten der Halbleiterkomponenten (4) gefluchtet ist,
- jeder der Streifen der ersten Farbbereiche (3a) des Filterelements (3) hinter den streifenartigen transparenten Bereichen (2a) des Konversionselements (2) in der Richtung (D) des Lichts angeordnet ist, und
- die Konversionsbereiche (2b) des Konversionselements (2) wie Streifen ausgebildet sind, wobei jeder der Streifen mit 2 x n Spalten der Halbleiterkomponenten (4) gefluchtet ist.

2. Hintergrundbeleuchtungseinheit (10) nach Anspruch 1, wobei die ersten Farbbereiche (3a) des Filterelements (3) transparent sind, um das Licht der ersten Farbe unverändert passieren zu lassen.

3. Hintergrundbeleuchtungseinheit (10) nach Anspruch 1 oder 2, wobei die zweiten Farbbereiche (3b) des Filterelements (3) einen Farbfilter zum Erzeugen der zweiten Farbe aus dem gemischten Licht umfassen.

4. Hintergrundbeleuchtungseinheit (10) nach einem der vorangehenden Ansprüche, wobei die dritten Farbbereiche (3c) des Filterelements (3) einen Farbfilter zum Erzeugen der dritten Farbe aus dem gemischten Licht umfassen.

5. Hintergrundbeleuchtungseinheit (10) nach einem der vorangehenden Ansprüche, wobei die Konversionsbereiche (2b) einen Leuchtstoff umfassen, welcher auf einer Wellenlänge emittiert, die der zweiten Farbe und der dritten Farbe entspricht.

6. Hintergrundbeleuchtungseinheit (10) nach einem der vorangehenden Ansprüche, wobei das Konversionselement (2) hinter der Lichtquelle (1) in der Richtung (D) des Lichts angeordnet ist und das Filterelement (3) hinter dem Konversionselement (2) in der Richtung (D) des Lichts angeordnet ist.

7. Hintergrundbeleuchtungseinheit (10) nach einem der vorangehenden Ansprüche, wobei jeder der Streifen der zweiten Farbbereiche (3b) und der dritten Farbbereiche (3c) des Filterelements (3) hinter den streifenähnlichen Konversionsbereichen (2b) des Konversionselements (2) in der Richtung (D) des Lichts angeordnet ist.

8. Hintergrundbeleuchtungseinheit (10) nach einem der vorangehenden Ansprüche, wobei das Konversionselement (2) und das Filterelement (3) zwei separate Platten sind.

9. Hintergrundbeleuchtungseinheit (10) nach einem der vorangehenden Ansprüche, wobei das Konversionselement (2) und das Filterelement (3) in einer Platte integriert sind und auf gegenüberliegenden Seiten eines Substrats angeordnet sind.

10. Hintergrundbeleuchtungseinheit (10) nach einem der vorangehenden Ansprüche, wobei das Konversionselement (2) und das Filterelement (3) in einer Platte integriert sind und auf der gleichen Seite eines Substrats übereinander angeordnet sind.

11. Hintergrundbeleuchtungseinheit (10) nach einem der vorangehenden Ansprüche, wobei das Licht der ersten Farbe blaues Licht ist und das gemischte Licht weißes Licht ist.

## Revendications

1. Unité de rétroéclairage (10), comprenant :
- une source lumineuse (1) émettant une lumière d'une première couleur,
- un élément de conversion (2) ayant une pluralité de régions transparentes (2a) destinées à laisser passer de façon non modifiée la lumière de la première couleur et une pluralité de régions de conversion (2b) destinées à convertir la lumière de la première couleur et à produire une lumière mélangée, et
- un élément de filtrage (3) ayant une pluralité de régions de première couleur (3a), une pluralité de régions de deuxième couleur (3b) et une pluralité de régions de troisième couleur (3c), la lumière d'une deuxième couleur étant produite à partir de la lumière mélangée dans les régions de deuxième couleur (3b) et la lumière de troisième couleur étant produite dans les régions de troisième couleur (3c) à partir de la lumière mélangée,
**caractérisée en ce que**
- la source lumineuse (1) comprend une pluralité de composants semi-conducteurs (4) qui sont agencés dans un plan et forment une matrice de colonnes et de lignes, chacun des composants semi-conducteurs (4) émettant une lumière de la première couleur,
- toutes les régions colorées (3a, 3b, 3c) sont réalisées sous la forme de bandes, chacune des bandes des régions de la première couleur (3a), des régions de la deuxième couleur (3b) et des régions de la troisième couleur (3c) étant alignées avec n colonnes(s) des composants semi-conducteurs (4), n étant un entier naturel,
- les régions transparentes (2a) de l'élément de conversion (2) sont réalisées sous la forme de bandes, chacune des bandes étant alignée vers n colonne(s) des composants semi-conducteurs (4),
- chacune des bandes des régions de première couleur (3a) de l'élément de filtrage (3) sont agencées à l'arrière des régions transparentes en forme de bandes (2a) de l'élément de conversion (2) dans la direction (D) de la lumière, et
- les régions de conversion (2b) de l'élément de conversion (2) sont réalisées sous la forme de bandes, chacune des bandes étant alignées avec 2 x n colonne(s) des composants semi-conducteurs (4).

2. Unité de rétroéclairage (10) selon la revendication 1, dans laquelle les régions de première couleur (3a) de l'élément de filtrage (3) sont transparentes afin de laisser passer de façon non modifiée la lumière de la première couleur.

3. Unité de rétroéclairage (10) selon la revendication 1 ou 2, dans laquelle les régions de deuxième couleur (3b) de l'élément de filtrage (3) comprennent un filtre coloré destiné à produire la deuxième couleur à partir de la lumière mélangée.

4. Unité de rétroéclairage (10) selon l'une des revendications précédentes, dans laquelle les régions de troisième couleur (3c) de l'élément de filtrage (3) comprennent un filtre coloré destiné à produire la troisième couleur à partir de la lumière mélangée.

5. Unité de rétroéclairage (10) selon l'une des revendications précédentes, dans laquelle les régions de conversion (2b) comprennent un luminophore émettant à une longueur d'onde correspondant à la deuxième couleur et à la troisième couleur.

6. Unité de rétroéclairage (10) selon l'une des revendications précédentes, dans laquelle l'élément de conversion (2) est disposé à l'arrière de la source lumineuse (1) dans la direction (D) de la lumière et l'élément de filtrage (3) est disposé à l'arrière de l'élément de conversion (2) dans la direction (D) de la lumière.

7. Unité de rétroéclairage (10) selon l'une des revendications précédentes, dans laquelle les bandes des régions de deuxième couleur (3b) et des régions de troisième couleur (3c) de l'élément de filtrage (3) sont chacune disposées à l'arrière des régions de conversion en forme de bandes (2b) de l'élément de conversion (2) dans la direction (D) de la lumière.

8. Unité de rétroéclairage (10) selon l'une des revendications précédentes, dans laquelle l'élément de conversion (2) et l'élément de filtrage (3) sont deux lames séparées.

9. Unité de rétroéclairage (10) selon l'une des revendications précédentes, dans laquelle l'élément de conversion (2) et l'élément de filtrage (3) sont intégrés dans une lame et sont disposés sur deux côtés opposés d'un substrat.

10. Unité de rétroéclairage (10) selon l'une des revendications précédentes, dans laquelle l'élément de conversion (2) et l'élément de filtrage (3) sont intégrés dans une lame et sont disposés l'un sur l'autre du même côté d'un substrat.

11. Unité de rétroéclairage (10) selon l'une des revendications précédentes, dans laquelle la lumière de la première couleur est une lumière bleue et la lumière mélangée est une lumière blanche.
